# EUROPEAN PATENT APPLICATION

(11) **EP 4 507 171 A1**
(43) Date of publication of application: **12.02.2025**
(21) Application number: 23205127.6
(22) Date of filing: 23.10.2023
(51) Int. Cl.: H02K 5/08

(54) **COATED ROTATING ELECTRIC MACHINE AND COATING APPLICATION METHOD ON A ROTATING ELECTRIC MACHINE**

(30) Priority: 09.08.2023 BR 102023016072
(71) Applicant: Weg Equipamentos Elétricos S/A, 89256900 Jaragua do Sul (BR)
(72) Inventor: Barbetta, Rafael Souza, 89251-580 Jaragua do Sul (BR); Jeferson, Ploszai, 89255-828 Jaragua do Sul (BR); Eleuterio, Jorge Miguel, 89253-336 Jaragua do Sul (BR); Andrzejewski, Rafael Ganzenmuller, 89252-278 Jaragua do Sul (BR); Voigt, Thiago, 89256-901 Jaragua do Sul (BR); Kaiser Junior, Valdir, 89254-070 Jaragua do Sul (BR)
(74) Representative: AWA Denmark A/S

(57) **Abstract**

The present invention relates to a rotating electric machine coated with an intumescent coating, wherein the intumescent coating has a homogeneous distribution throughout the surface of the substrate and a thickness corresponding to a value between 1% and 25%, preferably between 10% and 20% of the rotating electric machine housing wall thickness. The present invention further relates to an intumescent coating application method on a rotating electric machine.

## Description

### Field of application

The present invention pertains to the field of rotating electric machines, in particular the protection of rotating electric machines in hazardous environments, notably in extreme ambient temperature situations.

### Background of the Invention

Rotating electric machines are equipment used for transforming electric energy into mechanical energy, in the case of motors, and for transforming mechanical energy into electric energy, in the case of generators. Basically, rotating electric machines comprise four main structures, which are the housing, stator, rotor, and bearings/caps, in addition to one or more connection boxes and other accessories and components necessary for its operation.

The housing is a static element responsible for integrating the structures of the rotating electric machine.

The stator is the static active (energized) component responsible for transmitting the magnetic flux for rotating the rotor, in the case of motors, and for transmitting the energy generated by the rotor, in the case of generators, whereas the rotor is the active (energized) component of the rotating electric machine.

The rotor, in turn, essentially comprises a shaft onto which one or more cages, coils, or permanent magnets are arranged, depending on the construction type and operating principle of the rotating electric machine.

The bearings are the elements responsible for coupling the rotating parts to the static parts of a rotating electric machine, performing, for example, the coupling, bearing, and centralization of the (rotating) rotor in relation to the

(static) stator, allowing for relative movement between rotor and stator, as well as transmitting forces therebetween.

The connection boxes house and protect the connecting wires and cables, terminals, and any changeover switches and other electric and/or electronic and/or mechanical components necessary for the functioning and connection of the rotating electric machine to electric energy source or grid.

In addition to such elements, depending on the distinct features of each rotating electric machine, there may also be auxiliary systems such as air cooling or ventilation, which are essentially divided into self-ventilation systems, coupled to the rotating elements of the electric machine, and forced ventilation, which use elements external to the rotating electric machine and are coupled to elements fixed therein.

In addition to the normal heating required for the operation of a rotating electric machine, some applications expose the machines to extreme operating conditions, as is the case with rotating electric machines used to remove smoke from environments in the event of a fire, such as, for example and without limiting the invention, road tunnels, subway tunnels, factory facilities, building ducts and the like.

In case of fires, said electric machines are exposed to temperatures between 200 °C and 600 °C, whereby said electric machines must operate for predetermined minimum periods of time, even under said conditions before the excess temperature definitively compromises its functioning. The DS/EN 12101-3:2015 standard, for example, provides that an electric motor for smoke ventilation, in case of fire, must operate at temperatures of up to 400 °C for at least two hours.

Thus, rotating electric machines that operate in extreme conditions such as those described herein demand highly effective protection solutions to handle the high temperatures to which they are exposed in emergency situations, especially fires, without compromising its functioning in a regular operating regime.

Given that rotating electric machines operate under a myriad of different rotating conditions, mechanical loads, and temperatures, and given that the heat exchange in air-cooled electric machines increases according to the temperature differential and the volume of moved air, the overheating of the ambient air challenges and imposes limits on electric motor manufacturers beyond size and power limitations.

The restrictions also include the degree of protection and noise attenuation, since insulating against impurities, bad weather, and noise goes directly against the heat exchange between the electric machine and its surroundings, demanding a compromise between the variables which not always fully satisfies design requirements.

The challenge lies, therefore, in designing sufficient thermal protection to allow for the operation of the rotating electric machine in extreme temperature conditions for a certain time interval, without significantly increasing costs or component number, whereby the protection can still be applied on electric machines made in assembly lines, without the need for major adaptations.

### State of the art

There are several solutions in the state of the art for high-temperature-resistant rotating electric machines. An example is the patent document WO2021129033 A1 which discloses a synchronous high-temperature-resistant reluctance electric motor. According to this document, temperature resistance is achieved via use of individual components coated with refractory insulating materials which enable stable operation of components in the electric motor and terminal box, in a temperature environment above 200 °C. However, the time for which said electric motor can operate under such high-temperature conditions is not mentioned. Furthermore, the use of additional refractory materials increases costs, both in terms of material and manufacturing, also requiring the use of specific components for heat protection.

Patent document CN111585381 A, in turn, discloses and describes a fireproof motor for a high-temperature smoke environment. Although the invention discloses that the mounting seat and the protective cap have a good fireproof function for the motor junction box and high-temperature isolation effect, the temperature supported by the fireproof motor is not disclosed. Furthermore, the solutions found in the state of the art involve changing individual electric motor components, which would result in high application costs, in addition to demanding a greater number of parts and components in stock, preventing or further increasing the cost of using motors typically made in assembly lines.

As can be seen from the above description, there is space and demand for a high-temperature-resistant rotating electric machine solution which overcomes the disadvantages of the prior art via an intumescent coating application and, in particular, rotating electric machines coated with an intumescent coating, capable of withstanding high temperatures of up to 600 °C without losing functions for at least two hours. As well as a solution which allows for a longer equipment service life, reducing associated costs.

Furthermore, there is room for a solution that allows for the installation of rotating electric machines for smoke extraction applications which can be installed in pre-existing structures, for example, in air ducts of road tunnels without the need for further positioning, fixing, and cooling adaptations.

### Objects of the Invention

One of the objects of the present invention is therefore providing a rotating electric machine coated with an intumescent coating, according to the features of claim 1 of the appended set of claims.

A further object of the present invention is providing a coating application method on a rotating electric machine substrate, according to the features of claim 5 of the appended set of claims.

Additional features and details thereof are presented in the dependent claims.

### Brief description of the drawings

For a better understanding and visualization of the object to which the invention relates, it will now be described with reference to the accompanying figures, representing the obtained technical effect by means of an exemplary embodiment without limiting the scope of the present invention:
Figure 1: Shows a rotating electric machine coated with intumescent coating according to the present invention;
Figure 2a: Shows a rotating electric machine coated with intumescent coating prior to a smoke extraction situation;
Figure 2b: Shows the rotating electric machine of Figure 2a after a smoke extraction situation; and
Figure 3: Shows a comparison between the lifetime consumption of the rotating electric machine without the intumescent coating and with the intumescent coating.

### Detailed description of the invention

The present invention relates to a rotating electric machine coated with a temperature-resistant intumescent coating and a corresponding intumescent coating application method.

In the context of the present invention, the term "coating" broadly refers to surface coatings and/or coverings, such as, preferably, but without limiting the invention, paints, varnishes, primers and the like.

Intumescent coatings and, for example, but without limiting the invention, intumescent paints are coating paints that, when subjected to high temperatures, undergo many reactions expanding, in a controlled manner, from 10 to 100 times of the original layer thickness, thus forming a foam microporous carbonaceous with high insulating performance.

In this expansion process of intumescent coatings, endothermic reactions initiated at temperatures of approximately 250 °C allow intumescent coatings to protect the substrate for a period of time, absorbing heat from the environment and reducing the rate of heat transfer between the environment and the substrate.

In the context of the present invention, the term "rotating electric machine" broadly refers to a rotating electric machine for ventilation and exhaustion, capable of smoke extraction operations in environments with high fire hazard, being preferably an electric induction motor.

In the context of the present invention, the term "substrate" broadly refers to both the outside and eventually the inside of a rotating electric machine that is coated with the intumescent coating, and may comprise housing, bearings, caps, and other external parts, in addition to wires, coils, insulators, bearings, and other internal parts already known from a state-of-the-art rotating electric machine.

These intumescent coatings are typically used as a protection material for steel structures in fire situations, delaying the loss of strength of structural elements in the field of structural engineering.

However, for the specific case of rotating electric machines, the intumescent coating needs to be applied so as to not block the rotation of its internal elements and not compromise the machine's cooling system, whilst protecting the rotating electric machine's structural integrity.

The intumescent coating application method on a rotating electric machine, according to the present invention, comprises the steps of:
i. Providing one or more components of a rotating electric machine or an assembled rotating electric machine;
ii. Preparing the substrate surfaces of the rotating electric machine;
iii. Applying primers and/or adhesion promoters to the substrate surfaces of the rotating electric machine;
iv. Applying one or more protective layers of intumescent coating onto the substrate surfaces of the rotating electric machine until the intumescent coating layer has homogeneous distribution throughout the surface of the substrate and a thickness corresponding to a value between 1% and 25%, preferably between 10 % and 20% of the rotating electric machine housing wall thickness; and
v. Curing the coated surfaces of electric rotating machine substrates; and
vi. Applying one or more layers of finishing paint.

It should be noted that step vi. is an optional step and that the choice of finishing paint must consider the compatibility with the intumescent coating, *i.e.,* ensuring that the finishing paint does not influence the final performance of the intumescent coating action on the rotating electric machine.

Surface preparation of said substrates is done by removing possible surface contaminants, such as dirt, oils, greases, chemicals, and other forms of contamination, prior to application. This step is followed by the application of substrate adhesion promoters and/or primers.

The intumescent coating according to the present invention is preferably a hydrocarbon-based intumescent coating, prepared according to the supplier's instructions, to obtain a homogeneous mixture.

The application of said mixture to the substrate of the present invention can be done up to a suitable homogeneous thickness corresponding to a value between 1% and 25%, preferably between 10% and 20% of the housing of the rotating electric machine wall thickness, via manual application with a brush or preferably via spraying.

It should be noted that the smaller the thickness of the intumescent coating, the shorter the protection time in case of temperature increase in the operating environment of the rotating electric machine.

The intumescent coating application is preferably carried out on every external and/or exposed and/or apparent surface of the rotating electric machine, including, preferably but not limited to slits and/or closing regions and/or seals and/or closuring elements, and the intumescent coating may also be applied to one or more separate components and/or groups of components of a rotating electric machine. It should be noted that the intumescent coating could, in an alternative embodiment of the solution, be applied to the internal surfaces of the rotating electric machine.

In order to produce a cured coating, after applying the intumescent coating to the substrate, the composition is dried at a temperature equal to or greater than room temperature. It should be noted that the curing temperature of the intumescent coating cannot be higher than the temperature at which it begins to expand, *i.e.,* it cannot be higher than 80 °C. Furthermore, said coating must be 100% cured, without any wet parts, and have homogeneous application throughout the surface of the substrate in order to achieve the expected effect.

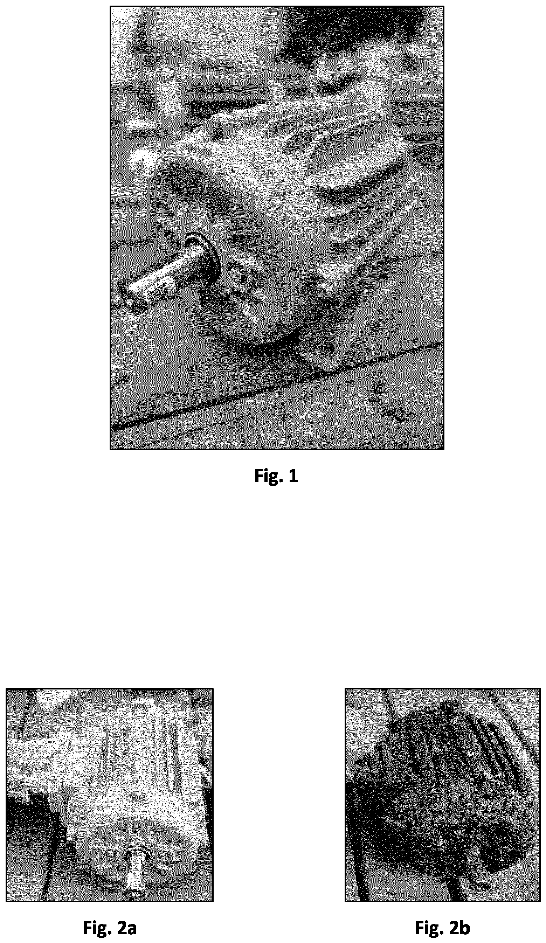

After curing, a smooth finishing coating is obtained, as shown in Figure 1, and additional finishing coating paints may then be applied to protect the intumescent coating from the atmosphere and provide the machine with the desired color.

Figure 2a shows a rotating electric machine after applying the intumescent coating and before a smoke extraction situation.

Whereas Figure 2b shows a rotating electric machine coated with intumescent coating after a smoke extraction situation, for example, without limiting the invention, after being subjected to temperatures of 600 °C for two hours.

As such, the intumescent coating application forms a thermal coating on the substrate in question after reaching temperatures above 250 °C, so that, under normal conditions, the operation and cooling of the rotating electric machine are not compromised by the coating.

In an exemplary embodiment of the present invention, the thermal coating with intumescent coating protects an electric motor from the action of external heat, initiating the intumescence reaction at approximately 250 °C. As such, the exemplary electric motor can withstand temperatures of up to 600 °C for at least two hours without apparent damage, as shown in Figure 2b.

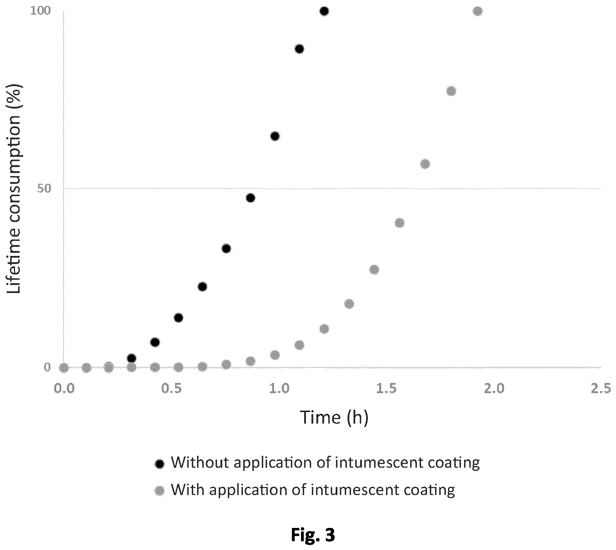

This high-temperature resistance for a longer period of time contributes both to a longer service life of the rotating electric machine and to greater reliability of the system (Figure 3), which needs to work correctly for as long as possible during fires and overtemperature situations, so as to be able to extract heat and smoke from the environment.

Thus, it remains evident that the application method of the invention overcomes the disadvantages of the relevant state of the art, providing protection for a rotating electric machine from the heat generated in the event of a fire, allowing its operation for a period longer than that reported for similar equipment, and with a lower associated manufacturing cost, and which can be installed in pre-existing structures without the need for further positioning, fixing, and cooling adaptations.

### Conclusion

It will be easily understood by one skilled in the art that modifications may be made to the present invention without departing from the concepts set out in the description above. Such modifications should be considered as included within the scope of the present invention. Consequently, the particular embodiments previously described in detail are illustrative and exemplary only and are non-restrictive as to the scope of the present invention, which should be given the full extent of the appended claims and any and all equivalents thereof.

## Claims

1. Coated rotating electric machine, **characterized in that** it comprises a substrate coated with intumescent coating.

2. Coated rotating electric machine, according to claim 1, **characterized in that** the intumescent coating has homogeneous distribution throughout the substrate surface of the rotating electric machine.

3. Coated rotating electric machine, according to claim 1 or 2, **characterized in that** the intumescent coating has a thickness corresponding to a value between 1% and 25%, preferably between 10% and 20% of the rotating electric machine housing wall thickness.

4. Coated rotating electric machine, according to any preceding claim, **characterized in that** the intumescent coating is preferably a hydrocarbon-based intumescent coating.

5. Coating application method on a rotating electric machine, **characterized in that** it comprises the steps of:
i. Providing one or more components of a rotating electric machine or an assembled rotating electric machine;
ii. Preparing the surfaces of at least one substrate of the rotating electric machine;
iii. Applying primers and/or adhesion promoters to the substrate surfaces of the rotating electric machine;
iv. Applying one or more protective layers of intumescent coating onto the substrate surfaces of the rotating electric machine until the intumescent coating layer has homogeneous distribution throughout the surface of the substrate and a thickness corresponding to a value between 1% and 25%, preferably between 10 % and 20% of the rotating electric machine housing wall thickness; and
v. Curing the coated surfaces of the rotating electric machine substrate.

6. Method, according to claim 5, **characterized in that**, in step iv., the intumescent coating is applied on the rotating electric machine via manual application with a brush or via spraying.

7. Method, according to claim 5 or 6, **characterized in that** it further comprises the step of:
vi. Applying one or more layers of finishing paint.

8. Method, according to any one of claims 5 to 7, **characterized in that** the application of the intumescent coating is carried out on every external and/or exposed and/or apparent surface of the rotating electric machine, including slits and/or closing regions and/or seals and/or closuring elements.

9. Method, according to any one of claims 5 to 8, **characterized in that** the intumescent coating is also applied to the internal surfaces of the rotating electric machine.
